(19) Europäisches Patentamt
European Patent Office
Office européen des brevets

(11) **EP 3 380 810 B1**

(12) **EUROPÄISCHE PATENTSCHRIFT**

(45) Veröffentlichungstag und Bekanntmachung des Hinweises auf die Patenterteilung:
**06.04.2022  Patentblatt 2022/14**

(21) Anmeldenummer: **16795284.5**

(22) Anmeldetag: **09.11.2016**

(51) Internationale Patentklassifikation (IPC):
**G06K 9/00** (2022.01)   **G01C 21/30** (2006.01)
**G01S 5/16** (2006.01)

(52) Gemeinsame Patentklassifikation (CPC):
**G01C 21/30; G01S 5/16; G06V 20/588**

(86) Internationale Anmeldenummer:
**PCT/EP2016/077112**

(87) Internationale Veröffentlichungsnummer:
**WO 2017/089136 (01.06.2017 Gazette 2017/22)**

(54) **VERFAHREN, VORRICHTUNG, KARTENVERWALTUNGSEINRICHTUNG UND SYSTEM ZUM PUNKTGENAUEN LOKALISIEREN EINES KRAFTFAHRZEUGS IN EINEM UMFELD**

METHOD, DEVICE, MAP PROCESSING DEVICE AND SYSTEM FOR PRECISE LOCALIZATION OF A VEHICLE IN ITS SURROUNDINGS

MÉTHODE, DISPOSITIF, INSTALLATION D'ADMINISTRATION DE CARTES ET SYSTÈME POUR LOCALISER AVEC PRÉCISION UN VÉHICULE DANS SON ENVIRONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.11.2015  DE 102015015156**
**01.04.2016  DE 102016205433**

(43) Veröffentlichungstag der Anmeldung:
**03.10.2018  Patentblatt 2018/40**

(73) Patentinhaber: **Volkswagen Aktiengesellschaft**
**38440 Wolfsburg (DE)**

(72) Erfinder:
• **TITZE, Andreas**
**38110 Braunschweig (DE)**
• **ORTMANN, Stefan**
**38102 Braunschweig (DE)**

(56) Entgegenhaltungen:
WO-A1-2009/098154   WO-A1-2012/122589
DE-A1-102011 117 809   DE-A1-102013 211 696
US-A1- 2015 151 725

**Beschreibung**

Die Erfindung betrifft eine Vorrichtung für ein Kraftfahrzeug, eine Kartenverwaltungseinrichtung, ein System und ein Verfahren zum punktgenauen Lokalisieren des Kraftfahrzeugs in einem Umfeld.

Moderne Kraftfahrzeuge weisen eine Vielzahl von Assistenzsystemen auf, darunter auch Navigationssysteme, welche in der Lage sind, ein Kraftfahrzeug innerhalb eines Umfeldes zu lokalisieren. Ein solches Navigationssystem basiert beispielsweise auf einem Globalen Positionsbestimmungssystem (GPS), bei dem eine Position des Kraftfahrzeugs durch Auswertung mehrerer satellitengestützter Signale bestimmt wird. Ferner sind auch Systeme bekannt, bei denen aus dem Umfeld des Kraftfahrzeugs Karten erstellt werden. Bei einer späteren Fahrt durch einen bereits kartierten Bereich kann das Kraftfahrzeug dann in der erstellten Karte lokalisiert werden.

Aus der DE 10 2014 002 821 A1 ist ein Verfahren zum Lokalisieren einer mobilen Einrichtung in einer Umgebung bekannt, wobei die Einrichtung mehrere Sensoren zum Erfassen der Umgebung der Einrichtung unter Nutzung unterschiedlicher Lokalisierungsmethoden aufweist, wobei für die Umgebung eine Referenzkarte vorliegt, die mehrere Positionen innerhalb der Umgebung umfasst, wobei für mindestens eine Position innerhalb der Umgebung mindestens eine Lokalisierungsmethode, die mit mindestens einem Sensor zum Erfassen der Umgebung durchzuführen ist, empfohlen wird, wobei für eine aktuelle Position der mobilen Einrichtung zum Lokalisieren der Einrichtung die mindestens eine laut der Referenzkarte empfohlene Lokalisierungsmethode, die mit mindestens einem Sensor durchzuführen ist, verwendet wird.

Aus der DE 10 2011 119 762 A1 ist ein für ein Kraftfahrzeug geeignetes PositionsbestimmungsSystem und ein entsprechendes Verfahren bekannt. Das System umfasst eine digitale Karte, in der Daten über ortsspezifische Merkmale lokalisiert verzeichnet sind, zumindest eine Umfelderkennungsvorrichtung zur Erfassung der ortsspezifischen Merkmale in der Umgebung des Fahrzeugs und ein mit der digitalen Karte und der Umfelderkennungsvorrichtung gekoppeltes Lokalisierungsmodul. Das Lokalisierungsmodul weist eine Verarbeitungseinheit zum Abgleich der erfassten Daten und der in der digitalen Karte verzeichneten Daten über die ortsspezifischen Merkmale und zur Lokalisierung der Fahrzeugposition anhand der in der digitalen Karte lokalisiert verzeichneten ortsspezifischen Merkmale auf. Ferner umfasst das System eine inertiale Messeinheit des Fahrzeugs für Fahrzeugbewegungsdaten, die mit dem Lokalisierungsmodul gekoppelt ist, dessen Verarbeitungseinheit konfiguriert ist, die Fahrzeugposition mittels der Fahrzeugbewegungsdaten basierend auf der anhand der ortsspezifischen Merkmale lokalisierten Position zu bestimmen.

Aus der WO 2009/098154 A1 ist ein Verfahren zum Abgleichen einer Karte mit von einem Sensor erfassten Objekten bekannt. Hierzu wird mindestens ein Objekt im Umfeld eines Fahrzeugs erfasst und Eigenschaften des Objekts geschätzt. Es wird eine Position des erfassten Objekts geschätzt auf Grundlage der Position des Fahrzeugs und der erfassten Sensordaten. Anschließend wird eine Abfrage bei einer Kartendatenbank oder Bilddatenbank durchgeführt auf Grundlage der Fahrzeugposition oder der Objektposition. Aus der Kartendatenbank oder Bilddatenbank können Objekte für diese Position extrahiert werden, welche mit dem erfassten Objekt verglichen werden mittels einer Vergleichslogik. Auf Grundlage des Vergleichsergebnisses können eine GPS-Position des Fahrzeugs oder die Positionsinformation des aus der Datenbank extrahierten Objekts angepasst werden.

Aus der DE 10 2011 117 809 A1 ist ein Verfahren zum Ergänzen von GPS-Daten unter Verwendung eines Moduls auf der Grundlage der fahrzeuginternen Bilderkennung bekannt. Eine Fahrzeugposition wird unter Nutzung positionsbezogener Daten bestimmt, die von einem Positionsmodul erhalten werden. Ein Positionsfehler wird auf periodischer Grundlage geschätzt. Es wird eine Bestimmung vorgenommen, ob der Positionsfehlerschätzwert einen ersten vorgegebenen Fehlerschwellenwert übersteigt. Über einen Fahrtverlauf werden unter Nutzung erfasster Bilder von dem Modul auf der Grundlage der fahrzeuginternen Bilderkennung Nachführungsdaten für das Fahrzeug erzeugt. In Ansprechen darauf, dass der Positionsfehlerschätzwert den ersten vorgegebenen Fehlerschwellenwert übersteigt, werden die Nachführungsdaten mit den positionsbezogenen Daten integriert, um die Fahrzeugposition zu schätzen. Es wird eine Bestimmung vorgenommen, ob der Positionsfehlerschätzwert unter einen zweiten vorgegebenen Fehlerschwellenwert abnimmt. Wenn der Positionsfehlerschätzwert unter den zweiten vorgegebenen Fehlerschwellenwert abnimmt, wird die Fahrzeugposition nur unter Verwendung der positionsbezogenen Daten neu bestimmt.

Aus der US 2015/0151725 A1 sind ein System und ein Verfahren bekannt, welche Kameras verwenden, um autonome Fahrfunktionen bereitzustellen. Aus der WO 2012/122589 A1 sind ferner ein Verfahren und eine Vorrichtung zum Bearbeiten von Bildern bekannt, bei denen über in zwei erfassten Radarbildern miteinander korrespondierende Punkte eine Position bestimmt wird.

Aus der DE 10 2013 211 696 A1 sind eine Vorrichtung und ein Verfahren zum Vervollständigen und/oder Aktualisieren einer digitalen Straßenkarte zumindest einer geographischen Region bekannt. Das Verfahren umfasst die Schritte: Erfassen eines digitalen Bilds eines Streckenabschnitts mittels einer Kamera eines auf dem Streckenabschnitt befindlichen Kraftfahrzeugs; Ermitteln einer aktuellen Position des Kraftfahrzeugs in Breitenrichtung des Streckenabschnitts und/oder zumindest einer Eigenschaft des Streckenabschnitts anhand des Bilds mittels einer Recheneinrichtung des Kraftfahrzeugs; Übermitteln eines Datensatzes an eine Servereinrichtung, der Informationen über eine geographische Position des Erfassens des Bilds sowie Informationen über die zumindest eine ermittelte Eigenschaft des Streckenabschnitts und/oder die Position in Breitenrichtung beinhaltet; wobei die Schritte durch eine Vielzahl von in der Region befindlichen Kraftfahrzeugen durchgeführt werden und die digitale Straßenkarte anhand der empfangenen Datensätze mittels der Servereinrichtung vervollständigt und/oder aktualisiert wird.

Der Erfindung liegt das technische Problem zu Grunde, ein Verfahren und ein System zum Lokalisieren eines Kraftfahrzeugs in einem Umfeld zu schaffen, bei dem das Lokalisieren des Kraftfahrzeugs in dem Umfeld verbessert ist.

Die technische Aufgabe wird erfindungsgemäß durch ein Verfahren mit den Merkmalen des Patentanspruchs 1, eine Vorrichtung mit den Merkmalen des Patentanspruchs 7, eine Kartenverwaltungseinrichtung mit den Merkmalen des Patentanspruchs 8 und ein System mit den Merkmalen des Patentanspruchs 9 gelöst. Vorteilhafte Ausgestaltungen der Erfindung ergeben sich aus den Unteransprüchen.

Insbesondere wird ein Verfahren zum punktgenauen Lokalisieren eines Kraftfahrzeugs in einem Umfeld zur Verfügung gestellt, umfassend die folgenden Schritte in einer Vorrichtung in dem Kraftfahrzeug: Erfassen einer Bilderabfolge des Umfelds des Kraftfahrzeugs durch mindestens eine Kamera, Erkennen und Klassifizieren von Objekten in der erfassten Bilderabfolge durch eine Auswerteeinheit, Bestimmen von Objektpositionen der Objekte relativ zum Kraftfahrzeug durch die Auswerteeinheit, Festlegen eines Teilstückes im Umfeld, wobei das Teilstück eine vorbestimmte Größe, sowie vorbestimmte Begrenzungen aufweist, Zuordnen der erkannten und klassifizierten Objekte zu den bestimmten Objektpositionen in dem festgelegten Teilstück, Ermitteln einer in dem Teilstück gelegenen Fahrspur des Kraftfahrzeugs durch die Auswerteeinheit, wobei die ermittelte Fahrspur durch einen Korridor aus einer linken Fahrspurbegrenzung und einer rechten Fahrspurbegrenzung beschrieben wird, wobei die linke Fahrspurbegrenzung und die rechte Fahrspurbegrenzung jeweils als Fahrspurfunktionen beschrieben werden und diese Beschreibungen Fahrspurinformationen bilden,

Übermitteln von Objektinformationen und der Objektpositionen der erkannten und klassifizierten Objekte, Teilstückinformationen zu dem festgelegten Teilstück, Fahrspurinformationen und einer Zeitinformation an eine außerhalb des Kraftfahrzeugs angeordnete und als zentraler Server ausgebildete Kartenverwaltungseinrichtung durch eine Sendeeinrichtung; und umfassend die folgenden Schritte in der

Kartenverwaltungseinrichtung: Empfangen der Objektinformationen und der Objektpositionen, der Teilstückinformationen, der Fahrspurinformationen und der Zeitinformation zu dem Teilstück von der Vorrichtung, Vergleichen der empfangenen Teilstückinformationen des Teilstückes mit einer digitalen Karte auf Grundlage der Objektinformationen und Objektpositionen, der Teilstückinformationen, der Fahrspurinformationen und der Zeitinformationen, Ermitteln eines korrespondierenden Teilstückes in der digitalen Karte, Übermitteln von mit dem Teilstück korrespondierenden Umfelddaten aus der digitalen Karte an die Vorrichtung; ferner umfassend die folgenden Schritte in der Vorrichtung in dem Kraftfahrzeug: Empfangen der Umfelddaten von der Kartenverwaltungseinrichtung mittels einer Empfangseinrichtung, Vergleichen der empfangenen Umfelddaten mit dem festgelegten Teilstück durch die Auswerteeinheit, Lokalisieren des Kraftfahrzeugs in dem Umfeld auf Grundlage des Vergleichsergebnisses durch die Auswerteeinheit.

Ferner wird eine Vorrichtung für ein Kraftfahrzeug zum punktgenauen Lokalisieren des Kraftfahrzeugs in einem Umfeld geschaffen, umfassend mindestens eine Kamera zum Erfassen einer Bilderabfolge des Umfelds des Kraftfahrzeugs, eine Auswerteeinheit, wobei die Auswerteeinheit derart ausgebildet ist, Objekte in der erfassten Bilderabfolge zu erkennen und zu klassifizieren, Objektpositionen der erkannten und klassifizierten Objekte relativ zur Kamera zu bestimmen, ein Teilstück im Umfeld festzulegen, wobei das Teilstück eine vorbestimmte Größe, sowie vorbestimmte Begrenzungen aufweist, die erkannten und klassifizierten Objekte den bestimmten Objektpositionen in dem festgelegten Teilstück zuzuordnen, und eine in dem Teilstück vorhandene Fahrspur des Kraftfahrzeugs zu ermitteln, wobei die ermittelte Fahrspur durch einen Korridor aus einer linken Fahrspurbegrenzung und einer rechten Fahrspurbegrenzung beschrieben wird, wobei die linke Fahrspurbegrenzung und die rechte Fahrspurbegrenzung jeweils als Fahrspurfunktionen beschrieben werden und diese Beschreibungen Fahrspurinformationen bilden, und eine Sendeeinrichtung welche derart ausgebildet ist, Objektinformationen und die Objektpositionen der erkannten und klassifizierten Objekte, Teilstückinformationen zu dem festgelegten Teilstück, Fahrspurinformationen und eine Zeitinformation an eine Kartenverwaltungseinrichtung zu übermitteln, und eine Empfangseinrichtung, welche derart ausgebildet ist, die Umfelddaten von der Kartenverwaltungseinrichtung zu empfangen, wobei die Auswerteeinheit ferner derart ausgebildet ist, die empfangenen Umfelddaten mit dem festgelegten Teilstück zu vergleichen und das Kraftfahrzeug in dem Umfeld auf Grundlage des Vergleichsergebnisses zu lokalisieren.

Darüber hinaus wird eine außerhalb des Kraftfahrzeugs angeordnete und als zentraler Server ausgebildete Kartenverwaltungseinrichtung geschaffen, umfassend eine Empfangseinrichtung, welche derart ausgebildet ist, die Objektinformationen und die Objektpositionen, die Teilstückinformationen, die Fahrspurinformationen und die Zeitinformation zu dem Teilstück von der Vorrichtung zu empfangen, eine Vergleichseinrichtung, welche derart ausgebildet ist, die empfangenen Teilstückinformationen des Teilstücks mit einer digitalen Karte auf Grundlage der Objektinformationen und Objektpositionen, der Teilstückinformationen, der Fahrspurinformationen und der Zeitinformationen zu vergleichen und ein korrespondierendes Teilstück in der digitalen Karte zu ermitteln, und eine Sendeeinrichtung, welche derart ausgebildet ist, mit dem Teilstück korrespondierende Umfelddaten aus der digitalen Karte an das Kraftfahrzeug zu übermitteln.

Im Zusammenspiel wird daraus ein System zum punktgenauen Lokalisieren eines Kraftfahrzeugs in einem Umfeld gebildet, umfassend mindestens eine Vorrichtung für ein Kraftfahrzeug zum punktgenauen Lokalisieren des Kraftfahrzeugs in einem Umfeld und eine Kartenverwaltungseinrichtung.

Es ist vorgesehen, dass die ermittelte Fahrspur in einem Teilstück durch einen Korridor aus einer linken Fahrspurbegrenzung und einer rechten Fahrspurbegrenzung beschrieben wird, wobei die linke und die rechte Fahrspurbegrenzung jeweils als Fahrspurfunktionen beschrieben werden. Dies hat den Vorteil, dass eine Datenmenge, welche zum Beschreiben der Fahrspur notwendig ist, reduziert werden kann. Dadurch wird Bandbreite bei der Kommunikation über eine Kommunikationsverbindung zwischen der mindestens einen mobilen Einrichtung und der Kartenverwaltungseinrichtung gespart.

Insbesondere ist bei einer Ausführungsform vorgesehen, dass die Fahrspurfunktionen als Polynomfunktionen dritten Grades ausgebildet sind. Dies führt zu einer besonders starken Datenreduktion bei gleichzeitiger Flexibilität. Pro Koordinate müssen dann nur vier Koeffizienten übertragen werden, so dass insgesamt bei drei Dimensionen zwölf Koeffizienten pro Teilstück übertragen werden müssen. Es kann dabei insbesondere vorgesehen sein, dass die Polynomfunktionen als unabhängige Variable eine Zeit aufweisen. Es ist aber genauso möglich, eine Ortskoordinate, beispielsweise einen Fahrweg etc. als unabhängige Variable zu verwenden.

In einer weiteren Ausführungsform ist vorgesehen, dass das Lokalisieren des Kraftfahrzeugs in dem festgelegten Teilstück durch einen Vergleich der linken Fahrspurbegrenzung und der rechten Fahrspurbegrenzung und/oder der zugehörigen Fahrspurfunktionen mit den für dieses festgelegte Teilstück empfangenen Umfelddaten erfolgt. Dies hat den Vorteil, dass ein Lokalisieren besonders effizient und schnell durchgeführt werden kann, da nur sehr wenige Daten miteinander verglichen werden müssen.

In einer Ausführungsform ist insbesondere vorgesehen, dass in dem Kraftfahrzeug zusätzlich eine oder mehrere mit dem festgelegten Teilstück korrespondierende Positionsinformationen mittels einer Globalen Positionsbestimmungseinrichtung ermittelt werden, wobei diese Positionsinformationen ebenfalls an die Kartenverwaltungseinrichtung übermittelt werden und von der Kartenverwaltungseinrichtung beim Vergleichen berücksichtigt werden. Dies hat den Vorteil, dass das Vergleichen beschleunigt wird, da bereits eine grobe Position des Kraftfahrzeugs im Umfeld bzw. in der digitalen Karte bekannt ist. Dadurch muss nur ein kleinerer Bereich in der digitalen Karte mit den übermittelten Daten verglichen und auf eine Ähnlichkeit hin untersucht werden. Als Globales Positionsbestimmungssystem kann beispielsweise das Global Positioning System (GPS) oder das Galileo-System zum Einsatz kommen.

In einer weiteren Ausführungsform ist vorgesehen, dass aus den empfangenen Umfelddaten Objektpositionen für Objekte im Umfeld des Kraftfahrzeugs relativ zu diesem bestimmt werden. Dies ermöglicht es, eine genaue relative Position der Objekte zum Kraftfahrzeug zur Verfügung zu stellen. Dies ist insbesondere von Vorteil, wenn das Kraftfahrzeug halbautomatisiert oder automatisiert gefahren wird. Dann kann anhand der Objekte für das Kraftfahrzeug eine exakte Orientierung und Position in dem Umfeld bestimmt werden.

In einer weiteren Ausführungsform ist ferner vorgesehen, dass die Kartenverwaltungseinrichtung in den Umfelddaten enthaltene Objekte entweder als Landmarken oder als Hindernisse klassifiziert. Eine solche Klassifikation ermöglicht es später der Auswerteeinheit in dem Kraftfahrzeug, schnell und effizient Hindernisse zu erkennen und diese zu umfahren bzw. rechtzeitig vor diesen anzuhalten. Durch eine Klassifikation in der Kartenverwaltungseinrichtung kann darüber hinaus Rechenleistung eingespart werden, da bei mehreren Vorrichtungen bzw. Kraftfahrzeugen nur einmal eine Klassifikation vorgenommen werden muss und nicht jede Vorrichtung oder jedes Kraftfahrzeug einzeln die Objekte klassifizieren muss. Insgesamt werden auf diese Weise Ressourcen gespart und die Kosten können reduziert werden.

Insbesondere kann ferner vorgesehen sein, dass die digitale Karte auch von der Kartenverwaltungseinrichtung erstellt wird. Dazu wertet die Kartenverwaltungseinrichtung die von der Vorrichtung in dem Kraftfahrzeug und/oder Vorrichtungen in anderen Kraftfahrzeugen oder anderen mobilen Einrichtungen übermittelten Objektinformationen und der Objektpositionen der erkannten und klassifizierten Objekte, Teilstückinformationen zu dem festgelegten Teilstück, Fahrspurinformationen und einer Zeitinformation aus und fügt benachbarte Teilstücke zusammen. Anschließend werden die zusammengefügten Teilstücke zu der digitalen Karte fusioniert.

Teile der Vorrichtung, der Kartenverwaltungseinrichtung und auch des Systems können einzeln oder zusammengefasst als eine Kombination von Hardware und Software ausgebildet sein, beispielsweise als Programmcode, der auf einem Mikrocontroller oder Mikroprozessor ausgeführt wird.

Nachfolgend wird die Erfindung anhand bevorzugter Ausführungsbeispiele unter Bezugnahme auf die Figuren näher erläutert. Hierbei zeigen:

Fig. 1    eine schematische Darstellung einer Ausführungsform des Systems zum punktgenauen Lokalisieren eines Kraftfahrzeugs in einem Umfeld;

Fig. 2 eine schematische Darstellung eines typischen Umfeldes eines Kraftfahrzeugs zur Verdeutlichung des Verfahrens;

Fig. 3 eine schematische Darstellung eines festgelegten Teilstückes mit Fahrspurfunktionen.

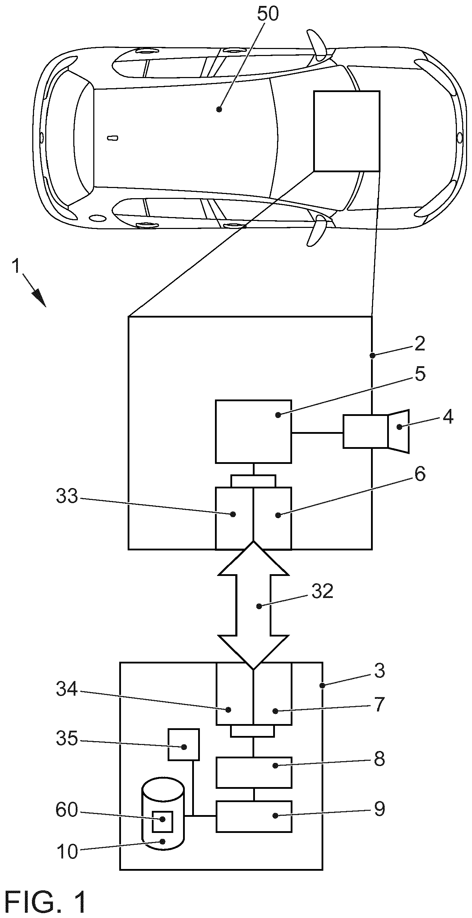

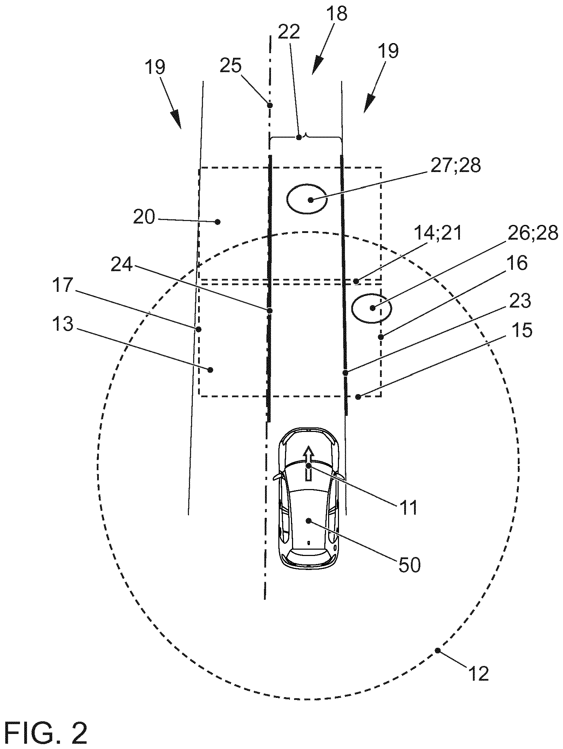

In Fig. 1 ist eine schematische Darstellung eines Systems 1 zum punktgenauen Lokalisieren eines Kraftfahrzeugs 50 in einem Umfeld 12 (siehe Fig. 2) dargestellt. Das System 1 umfasst mindestens eine Vorrichtung 2, welche in diesem Beispiel in dem Kraftfahrzeug 50 ausgebildet ist, und eine Kartenverwaltungseinrichtung 3, welche als ein zentraler Server ausgebildet ist. Die Kartenverwaltungseinrichtung soll im Folgenden insbesondere auch das Erstellen einer digitalen Karte durchführen.

Die Vorrichtung 2 umfasst eine Kamera 4, eine Auswerteeinheit 5, eine Sendeeinrichtung 6, und eine Empfangseinrichtung 33. Die Kartenverwaltungseinrichtung 3 umfasst beispielsweise eine Empfangseinrichtung 7, eine Zusammenfügeeinrichtung 8, eine Fusionierungseinrichtung 9, einen Speicher 10, in dem eine digitale Karte 60 abgelegt ist, eine Sendeeinrichtung 34 und eine Vergleichseinrichtung 35.

Fig. 2 zeigt eine schematische Darstellung eines typischen Umfeldes 12 eines Kraftfahrzeugs 50 zur Verdeutlichung des Verfahrens. Die Kamera 4 (siehe Fig. 1) weist beispielsweise in eine Fahrtrichtung 11 des Kraftfahrzeugs 50. Die Kamera 4 erfasst eine Abfolge von Bildern des Umfeldes 12 des Kraftfahrzeugs 50. Die erfasste Abfolge von Bildern wird der Auswerteeinheit 5 von der Kamera 4 zugeleitet. Aus der Abfolge von Bildern legt die Auswerteeinheit 5 ein Teilstück 13 fest. Dieses Teilstück 13 hat eine vorgegebene Größe. Ein solches Teilstück 13 weist darüber hinaus eine vordere Begrenzung 14, eine hintere Begrenzung 15, eine rechte Begrenzung 16 und eine linke Begrenzung 17 auf. In dem festgelegten Teilstück 13 befindet sich ein Abschnitt einer Straße 18, auf der sich das Kraftfahrzeug 50 gerade befindet, sowie ein Ausschnitt der Umgebung 19 der Straße 18. Ein weiteres Teilstück 20 wird zu einem späteren Zeitpunkt aus einer weiteren Abfolge von Bildern festgelegt, so dass die hintere Begrenzung 21 des weiteren Teilstückes 20 gleich der vorderen Begrenzung 14 des davor festgelegten Teilstückes 13 ist. Auf diese Weise wird das Umfeld 12 des Kraftfahrzeugs 50 schrittweise zu verschiedenen Zeitpunkten erfasst und sukzessive in Form von Teilstücken 13, 20 aneinander gereiht.

In jedem Teilstück 13, 20 ermittelt die Auswerteeinheit 5 eine Fahrspur 22 des Kraftfahrzeugs 50. In diesem Beispiel wird die Fahrspur 22 auf der rechten Seite durch die Fahrbahnbegrenzung 23 der Straße 18 begrenzt, wobei die rechte Fahrbahnbegrenzung 23 beispielsweise durch die rechte Fahrbahnlinie gegeben sein kann. Die linke Fahrspurbegrenzung 24 der Fahrspur 22 ist beispielsweise durch eine Mittellinie 25 der Straße 18 gegeben.

Die jeweilige Fahrspurbegrenzung 23, 24 der Fahrspur 22 wird mittels eines Bilderkennungsverfahrens in der Auswerteeinheit 5 erkannt und beispielsweise für jede Koordinate mathematisch in Form einer Polynomfunktion dritten Grades dargestellt:

$$X(t) = a_3t^3 + a_2t^2 + a_1t + a_0,$$

$$Y(t) = b_3t^3 + b_2t^2 + b_1t + b_0,$$

$$Z(t) = c_3t^3 + c_2t^2 + c_1t + c_0.$$

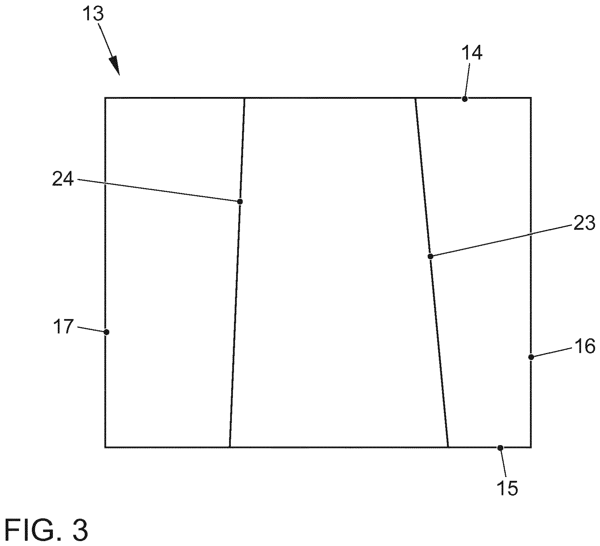

Die Koordinaten X, Y, und Z beziehen sich auf ein Koordinatensystem, welches beispielsweise auf die Kameraposition oder den Mittelpunkt der vorderen Begrenzung 14 des Teilstückes 22 bezogen ist. Die Koordinate X beschreibt das Koordinatensystem in Fahrtrichtung 11, die Koordinate Y in seitlicher Richtung und die Koordinate Z in vertikaler Richtung. Die Funktion X(t) beschreibt somit eine Funktion in X-Richtung in Abhängigkeit einer Zeit t, welche in Bezug gesetzt wird mit der Zeit, zu welcher das Teilstück 13 ermittelt wurde. Somit ist jeder Punkt der erkannten Fahrspur 22 räumlich definiert. Die Koeffizienten der Fahrspurfunktionen können mathematisch durch geeignete Fitverfahren ermittelt werden, so dass die einzelnen Fahrspurfunktionen durch die ermittelten Koeffizienten $a_1$, $a_2$, $a_3$, ao und $b_1$, $b_2$, $b_3$, bo und $c_1$, $c_2$, $c_3$, $c_0$ festgelegt sind und als Funktion der Zeit die Fahrspurbegrenzungen 23, 24 abbilden. Eine schematische Darstellung des Teilstückes 13 mit den Fahrspurfunktionen ist in Fig. 3 gezeigt.

Die Koeffizienten bilden eine Fahrspurinformation, welche zusammen mit einer Zeitinformation und einer Teilstückinformation an die Kartenverwaltungseinrichtung 3 bzw. an den Server mittels der Sendeeinrichtung 6 der Vorrichtung 2 übermittelt werden. Das Übermitteln findet beispielsweise mittels einer drahtlosen Kommunikationsverbindung 32 statt (siehe Fig. 1). Durch die Beschreibung der Fahrspur 22 mittels der Polynomfunktionen kann die zu übertragende Datenmenge deutlich reduziert werden, so dass pro Teilstück 13, 20 nur geringe Datenmengen übermittelt werden müssen.

Es ist weiterhin vorgesehen, dass auch weitere Objekte 28 in dem Umfeld 12 erfasst werden. So gibt es beispielsweise eine Landmarke 26 und ein Hindernis 27 in der Umgebung 19 der Fahrspur 22 bzw. auf der Fahrspur 22. Die Landmarke 26 kann beispielsweise ein Baum oder eine Straßenbeleuchtung sein. Bei dem Hindernis 27 kann es sich beispielsweise um ein weiteres Kraftfahrzeug handeln, welches das Ende eines Staus markiert oder ein Hinweis darauf, dass auf dieser Fahrspur 22 gearbeitet wird und die Fahrspur 22 gewechselt werden muss.

Die Kamera 4 erfasst einen Bildinhalt und mittels eines geeigneten Verfahrens für die Objekterkennung ist es möglich, zu bestimmen, um welches Objekt 28 es sich handelt. Dabei können sämtliche bekannte Verfahren zur Objekterkennung zum Einsatz kommen, insbesondere Mustererkennungsverfahren. Es ist ebenfalls möglich, dass eine Position des Objektes 28, beispielsweise relativ zur Kamera 4, bestimmt wird. Dies geschieht beispielsweise durch den Vergleich der erkannten Objekte 28 mit in Tabellen abgespeicherten Objekten. Dadurch wird eine Größe der Objekte 28 bestimmt und es kann dann auf einen Abstand zum Kraftfahrzeug 50 bzw. zur Kamera 4 geschlossen werden. Durch eine Bestimmung der Winkel der Objekte 28 relativ zur Kamera 4 in mehreren nacheinander ermittelten Teilstücken 13, 20, ist die Position des Objektes 28 bekannt. Die Position kann beispielsweise in Form eines Vektors oder als eine Koordinate mit einem entsprechenden Objekttyp definiert werden. Diese Objektinformationen werden ebenfalls als Funktion der Zeit zu jedem Teilstück 13, 20 ermittelt und mittels der Sendeeinrichtung 6 an die Kartenverwaltungseinrichtung 3 bzw. an den Server übermittelt.

Die Kartenverwaltungseinrichtung 3 empfängt Objektinformationen und zugehörige Objektpositionen, Teilstückinformationen, Fahrspurinformationen und Zeitinformationen zu jedem der Teilstücke 13, 20. Mittels eines geeigneten Verfahrens werden diese dann derart zusammengesetzt, dass eine digitale Karte 60 mit der Fahrspur 22 entsteht. Dabei können zum Zusammensetzen der Teilstücke beispielsweise bekannte Mustererkennungsverfahren verwendet werden. Ein solches Verfahren ist mit den vorliegenden Informationen in der Lage, die Teilstückinformationen zuzuordnen und die Teilstücke 13, 20 bei entsprechender Übereinstimmung aneinander zu fügen.

Das Zusammenfügen der einzelnen Teilstücke 13, 20 wird in der Kartenverwaltungseinrichtung 3 beispielsweise von einer Zusammenfügeeinrichtung 8 vorgenommen.

Die Ähnlichkeit zwischen verschiedenen Teilstücken 13, 20 wird beispielsweise durch einen Vergleich der Koeffizienten der Fahrspurfunktionen bestimmt. Wenn diese übereinstimmen, kann davon ausgegangen werden, dass es sich um dieselbe Fahrspur 22 handelt. Zur Verifizierung werden noch weitere Informationen miteinander verglichen, wie beispielsweise die Objektinformationen zur Art und Lage von Objekten 28, die sich außerhalb der Fahrspur 22 befinden.

Die digitale Karte 60 der Fahrspur 22 kann dadurch verbessert werden, dass eine Vielzahl von Vorrichtungen 2, beispielsweise in einer Vielzahl von Kraftfahrzeugen 50, jeweils Objektinformationen und zugehörige Objektpositionen, Teilstückinformationen, Fahrspurinformationen und Zeitinformationen zu jedem der Teilstücke an die Kartenverwaltungseinrichtung 3 sendet und die Kartenverwaltungseinrichtung 3 diese Informationen verwendet, um daraus, beispielsweise mittels einer Gewichtung und einem Mitteln bzw. Übereinanderlegen, die digitale Karte 60 mit besonders hoher Genauigkeit zu erstellen.

Die Mittelung von mehreren Teilstücken 13, 20 mehrerer Vorrichtungen 2 wird in der Kartenverwaltungseinrichtung 3 beispielsweise von der Fusionierungseinrichtung 9 vorgenommen. Die digitale Karte 60 wird in dem Speicher 10 hinterlegt und kann dort jederzeit verändert und wieder abgerufen werden.

Hat sich beispielsweise ein Objekt 28 eines Teilstückes 13, 20 verändert, stellt das Verfahren in der Kartenverwaltungseinrichtung 3 sicher, dass in einem ersten Schritt eine bestimmte Anzahl von Informationen übereinstimmen. Dies können zum Beispiel die Koeffizienten der Fahrspuren 22 sein. Stimmen bei einem Vergleich auch weitere Parameter überein, wie zum Beispiel Objektgrößen und Objekttypen der Objekte 28 (zum Beispiel bei einem Baum), dann wird davon ausgegangen, dass es sich um ein Teilstück 13, 20 handelt, welches bereits zu einem früheren Zeitpunkt erfasst und in der digitalen Karte 60 abgelegt wurde.

In der Kartenverwaltungseinrichtung 3 bzw. in dem Server wird somit ein Abbild des Umfeldes 12 in einem lokalen (digitale Karte 60) und globalen Koordinatensystem zusammengestellt, welches aus einer Vielzahl von Informationen aus Teilstücken 13, 20 besteht. Insbesondere können somit eine Vielzahl von erfassten Abfolgen von Bildern mehrerer Vorrichtungen 2 zu einer einzigen, sehr genauen digitalen Karte 60 fusioniert werden.

Mittels einer Erkennung und Klassifikation von Objekten als Landmarken 26 oder als Hindernis 27 und einer Mittelung der zugehörigen Objektpositionen kann eine hoch genaue Verortung in einem Weltkoordinatensystem berechnet werden. Diese dient der Verankerung der Teilstücke 13, 20 in der digitalen Karte 60.

Die Kartenverwaltungseinrichtung ist in der Lage, das zusammengestellte Abbild des Umfeldes 12 als digitale Karte 60 wieder an die Vorrichtung 2 in dem Kraftfahrzeug 50 zu senden. Dazu werden die empfangenen Objektinformationen und Objektpositionen, Teilstückinformationen, Fahrspurinformationen und die Zeitinformation zu dem Teilstück 13 von einer Vergleichseinrichtung 35 der Kartenverwaltungseinrichtung 3 ausgewertet, indem das Teilstück 13 mit der digitalen Karte 60 verglichen wird. Die mit dem Teilstück 13 korrespondierenden Umfelddaten aus der digitalen Karte 60 werden dann mittels einer Sendereinrichtung 34 an die Vorrichtung 2 übermittelt.

Empfängt die Vorrichtung 2 die Umfelddaten mittels der Empfangseinrichtung 33, so wird das empfangene Teilstück des Umfeldes 12 in der Auswerteeinheit 5 mit dem gerade aufgenommenen Teilstück 13 verglichen und die genaue Position der Vorrichtung 2 in dem Kraftfahrzeugs 50 wird durch Auswerten der Abweichung festgelegt. Mittels dieses Verfahrens ist es möglich, die exakte Position des Kraftfahrzeugs 50 auf der Fahrspur 22 zu ermitteln. Zusätzlich ist es möglich, die exakte Position von Objekten 28 im Umfeld 12 des Kraftfahrzeugs 50 zu ermitteln.

Auf diese Weise können die linke Begrenzung 24 und die rechte Begrenzung 23 der Fahrspur 22 im Zentimeterbereich genau ermittelt werden. Das Kraftfahrzeug 50 ist in der Lage, sich dadurch auf der Fahrspur 22 genau zu lokalisieren. Diese genaue Lokalisierung ist insbesondere für automatisierte Fahrten wichtig.

Es ist ebenfalls vorteilhaft, Objekte 28 im Umfeld 12 des Kraftfahrzeugs 50 genau zu lokalisieren und in der digitalen Karte 60 zu vermerken. Dabei ist es insbesondere vorteilhaft, wenn ein Objekt 28 in der Kartenverwaltungseinrichtung 3 als ein Hindernis 27 auf der Fahrbahn 22 klassifiziert wurde. Durch Übermitteln der entsprechenden Klassifizierung des Hindernisses 27 an die Vorrichtung 2 in dem Kraftfahrzeug 50 ist das Kraftfahrzeug 50 in der Lage, genau dieses Hindernis 27 zu umfahren, vor diesem Hindernis 27 anzuhalten oder andere Verkehrsteilnehmer davor zu warnen.

Es kann ferner zusätzlich vorgesehen sein, dass eine grobe Positionsschätzung mittels eines zusätzlichen Globalen Positionsbestimmungssystems (GPS) im Kraftfahrzeug 50 vorgenommen wird. Die Positionsschätzung wird dann ebenfalls an die Kartenverwaltungseinrichtung 3 übermittelt, so dass ein Auffinden des korrespondierenden Teilstückes 13, 20 in der digitalen Karte 60 effizienter und schneller durchgeführt werden kann.

Teile der Vorrichtung 2, der Kartenverwaltungseinrichtung 3 und auch des Systems 1 können einzeln oder zusammengefasst als eine Kombination von Hardware und Software ausgebildet sein, beispielsweise als Programmcode, der auf einem Mikrocontroller oder Mikroprozessor ausgeführt wird.

**Bezugszeichenliste**

| | |
|---|---|
| 1 | System |
| 2 | Vorrichtung |
| 3 | Kartenverwaltungseinrichtung |
| 4 | Kamera |
| 5 | Auswerteeinheit |
| 6 | Sendeeinrichtung |
| 7 | Empfangseinrichtung |
| 8 | Zusammenfügeeinrichtung |
| 9 | Fusionierungseinrichtung |
| 10 | Speicher |
| 11 | Fahrtrichtung |
| 12 | Umfeld |
| 13 | Teilstück |
| 14 | vordere Begrenzung |
| 15 | hintere Begrenzung |
| 16 | rechte Begrenzung |
| 17 | linke Begrenzung |
| 18 | Straße |
| 19 | Umgebung |
| 20 | weiteres Teilstück |
| 21 | hintere Begrenzung des weiteren Teilstückes |
| 22 | Fahrspur |
| 23 | rechte Fahrbahnbegrenzung |
| 24 | linke Fahrspurbegrenzung |
| 25 | Mittellinie |
| 26 | Landmarke |
| 27 | Hindernis |
| 28 | Objekt |
| 32 | Kommunikationsverbindung |
| 33 | Empfangseinrichtung |
| 34 | Sendeeinrichtung |
| 35 | Vergleichseinrichtung |
| 50 | Kraftfahrzeug |
| 60 | digitale Karte |

**Patentansprüche**

1. Verfahren zum punktgenauen Lokalisieren eines Kraftfahrzeugs (50) in einem Umfeld (12), umfassend die Schritte:

- in einer Vorrichtung (2) in dem Kraftfahrzeug (50):
Erfassen einer Bilderabfolge des Umfelds (12) des Kraftfahrzeugs (50) durch mindestens eine Kamera (4), Erkennen und Klassifizieren von Objekten (28) in der erfassten Bilderabfolge durch eine Auswerteeinheit (5), Bestimmen von Objektpositionen der Objekte (28) relativ zum Kraftfahrzeug (50) durch die Auswerteeinheit (5), Festlegen eines Teilstückes (13) im Umfeld (12), wobei das Teilstück (13) eine vorbestimmte Größe, sowie vorbestimmte Begrenzungen (14, 15, 16, 17) aufweist, Zuordnen der erkannten und klassifizierten Objekte (28) zu den bestimmten Objektpositionen in dem festgelegten Teilstück (13), Ermitteln einer in dem Teilstück (13) gelegenen Fahrspur (22) des Kraftfahrzeugs (50) durch die Auswerteeinheit (5), wobei die ermittelte Fahrspur (22) durch einen Korridor aus einer linken Fahrspurbegrenzung (24) und einer rechten Fahrspurbegrenzung (23) beschrieben wird, wobei die linke Fahrspurbegrenzung (24) und die rechte Fahrspurbegrenzung (23) jeweils als Fahrspurfunktionen beschrieben werden und diese Beschreibungen Fahrspurinformationen bilden, Übermitteln von Objektinformationen und der Objektpositionen der erkannten und klassifizierten Objekte (28), Teilstückinformationen zu dem festgelegten Teilstück (13), der Fahrspurinformationen und einer Zeitinformation an eine außerhalb des Kraftfahrzeugs (50) angeordnete und als zentraler Server ausgebildete Kartenverwaltungseinrichtung (3) durch eine Sendeeinrichtung (6);
- in der Kartenverwaltungseinrichtung (3):
Empfangen der Objektinformationen und der Objektpositionen, der Teilstückinformationen, der Fahrspurinformationen und der Zeitinformation zu dem Teilstück (13) von der Vorrichtung (2), Vergleichen der empfangenen Teilstückinformationen des Teilstückes (13) mit einer digitalen Karte (60) auf Grundlage der Objektinformationen und Objektpositionen, der Teilstückinformationen, der Fahrspurinformationen und der Zeitinformationen, Ermitteln eines korrespondierenden Teilstückes (13) in der digitalen Karte (60), Übermitteln von mit dem Teilstück (13) korrespondierenden Umfelddaten aus der digitalen Karte (60) an die Vorrichtung (2);
- in der Vorrichtung (2) in dem Kraftfahrzeug (50):
Empfangen der Umfelddaten von der Kartenverwaltungseinrichtung (3) mittels einer Empfangseinrichtung (33), Vergleichen der empfangenen Umfelddaten mit dem festgelegten Teilstück (13) durch die Auswerteeinheit (5), Lokalisieren des Kraftfahrzeugs (50) in dem Umfeld (12) auf Grundlage des Vergleichsergebnisses durch die Auswerteeinheit (5).

2. Verfahren nach Anspruch 1, **dadurch gekennzeichnet, dass** die Fahrspurfunktionen als Polynomfunktionen dritten Grades ausgebildet werden.

3. Verfahren nach einem der Ansprüche 1 oder 2, **dadurch gekennzeichnet, dass** das Lokalisieren des Kraftfahrzeugs (50) in dem festgelegten Teilstück (13) durch einen Vergleich der linken Fahrspurbegrenzung (24) und der rechten Fahrspurbegrenzung (23) und/oder der zugehörigen Fahrspurfunktionen mit den für dieses festgelegte Teilstück (13) empfangenen Umfelddaten erfolgt.

4. Verfahren nach einem der vorangegangenen Ansprüche, **dadurch gekennzeichnet, dass** in dem Kraftfahrzeug (50) zusätzlich eine oder mehrere mit dem festgelegten Teilstück (13) korrespondierende Positionsinformationen mittels einer Globalen Positionsbestimmungseinrichtung ermittelt werden, wobei diese Positionsinformationen ebenfalls an die Kartenverwaltungseinrichtung (3) übermittelt werden und von der Kartenverwaltungseinrichtung (3) beim Vergleichen berücksichtigt werden.

5. Verfahren nach einem der vorangegangenen Ansprüche, **dadurch gekennzeichnet, dass** aus den empfangenen Umfelddaten Objektpositionen für Objekte (28) im Umfeld (12) des Kraftfahrzeugs (50) relativ zu diesem bestimmt werden.

6. Verfahren nach einem der vorangegangenen Ansprüche, **dadurch gekennzeichnet, dass** die Kartenverwaltungseinrichtung (3) in den Umfelddaten enthaltene Objekte (28) entweder als Landmarken (26) oder als Hindernisse (27) klassifiziert.

7. Vorrichtung (2) für ein Kraftfahrzeug (50) zum punktgenauen Lokalisieren des Kraftfahrzeugs (50) in einem Umfeld (12), umfassend:

mindestens eine Kamera (4) zum Erfassen einer Bilderabfolge des Umfelds (12) des Kraftfahrzeugs (50),
eine Auswerteeinheit (5), wobei die Auswerteeinheit (5) derart ausgebildet ist, Objekte (28) in der erfassten Bilderabfolge zu erkennen und zu klassifizieren,
Objektpositionen der erkannten und klassifizierten Objekte (28) relativ zur Kamera (4) zu bestimmen, ein Teilstück (13) im Umfeld (12) festzulegen, wobei das Teilstück (13) eine vorbestimmte Größe, sowie vorbestimmte Begrenzungen (14, 15, 16, 17) aufweist, die erkannten und klassifizierten Objekte (28) den bestimmten Objektpositionen in dem festgelegten Teilstück (13) zuzuordnen, und eine in dem Teilstück (13) vorhandene Fahrspur (22) des Kraftfahrzeugs (50) zu ermitteln, wobei die ermittelte Fahrspur (22) durch einen Korridor aus einer linken Fahrspurbegrenzung (24) und einer rechten Fahrspurbegrenzung (23) beschrieben wird, wobei die linke Fahrspurbegrenzung (24) und die rechte Fahrspurbegrenzung (23) jeweils als Fahrspurfunktionen beschrieben werden und diese Beschreibungen Fahrspurinformationen bilden, und
eine Sendeeinrichtung (6), welche derart ausgebildet ist, Objektinformationen und die Objektpositionen der erkannten und klassifizierten Objekte (28),
Teilstückinformationen zu dem festgelegten Teilstück (13), der Fahrspurinformationen und eine Zeitinformation an eine außerhalb des Kraftfahrzeugs (50) angeordnete und als zentraler Server ausgebildete Kartenverwaltungseinrichtung (3) zu übermitteln, und eine Empfangseinrichtung (33), welche derart ausgebildet ist, die Umfelddaten von der Kartenverwaltungseinrichtung (3) zu empfangen,
wobei die Auswerteeinheit (5) ferner derart ausgebildet ist, die empfangenen Umfelddaten mit dem festgelegten Teilstück (13) zu vergleichen und das Kraftfahrzeug (50) in dem Umfeld (12) auf Grundlage des Vergleichsergebnisses zu lokalisieren.

8. Eine außerhalb des Kraftfahrzeugs angeordnete und als zentraler Server ausgebildete Kartenverwaltungseinrichtung (3), umfassend:

eine Empfangseinrichtung (7), welche derart ausgebildet ist,
die Objektinformationen und die Objektpositionen, die Teilstückinformationen, die Fahrspurinformationen und die Zeitinformation zu dem Teilstück (13) von der Vorrichtung (2) gemäß Anspruch 7 zu empfangen,
eine Vergleichseinrichtung (35), welche derart ausgebildet ist, die empfangenen Teilstückinformationen des Teilstücks (13) mit einer digitalen Karte (60) auf Grundlage der Objektinformationen und Objektpositionen, der Teilstückinformationen,
der Fahrspurinformationen und der Zeitinformationen zu vergleichen und ein korrespondierendes Teilstück (13) in der digitalen Karte (60) zu ermitteln, und
eine Sendeeinrichtung (34), welche derart ausgebildet ist, mit dem Teilstück korrespondierende Umfelddaten aus der digitalen Karte an das Kraftfahrzeug zu übermitteln.

9. System (1) zum punktgenauen Lokalisieren eines Kraftfahrzeugs (50) in einem Umfeld (12), umfassend mindestens eine Vorrichtung (2) nach Anspruch 7 und eine außerhalb des Kraftfahrzeugs (50) angeordnete und als zentraler Server ausgebildete Kartenverwaltungseinrichtung (3) nach Anspruch 8.

**Claims**

1. Method for precise localization of a motor vehicle (50) in its surroundings (12), comprising the steps of:

- in a device (2) in the motor vehicle (50):
capturing an image sequence of the surroundings (12) of the motor vehicle (50) by means of at least one camera (4); detecting and classifying objects (28) in the captured image sequence by means of an evaluation unit (5); determining object positions of the objects (28) relative to the motor vehicle (50) by the evaluation unit (5); defining a section (13) in the surroundings (12), wherein the section (13) has a predetermined size, as well as predetermined boundaries (14, 15, 16, 17); associating the detected and classified objects (28) with the determined object positions in the defined section (13); identifying a traffic lane (22), located in the section (13), of the motor vehicle (50) by the evaluation unit (5), wherein the traffic lane (22) identified is described by a corridor comprising a left lane boundary (24) and a right lane boundary (23), wherein the left lane boundary (24) and the right lane boundary (23) are each described as lane functions, and these descriptions form lane information; transmitting, by means of transmitting device (6), object information and the object positions of the detected and classified objects (28), section information relating to the defined section (13), lane information, and time information to a map processing device (3) arranged outside the motor vehicle (50) and designed as a central server;
- in the map processing device (3):
receiving the object information and the object positions, the section information, the lane information, and the time information relating to the section (13) from the device (2); comparing the received section information of the section (13) to a digital map (60) on the basis of the object information and object positions, the section information, the traffic lane information, and the time information; identifying a corresponding section (13) in the digital map (60); transmitting surroundings data, corresponding to the section (13), from the digital map (60) to the device (2);
- in the device (2) in the motor vehicle (50):
receiving the surroundings data from the map processing device (3) by means of a receiving device (33); comparing the received surroundings data to the defined section (13) by means of the evaluation unit (5); localizing the motor vehicle (50) in the surroundings (12) on the basis of the comparison result by means of the evaluation unit (5).

2. Method according to claim 1, **characterized in that** the lane functions are designed as third-degree polynomial functions.

3. Method according to one of claims 1 or 2, **characterized in that** the motor vehicle (50) is localized in the defined section (13) by comparing the left lane boundary (24) and the right lane boundary (23) and/or the associated lane functions to the surroundings data received for said defined section (13).

4. Method according to one of the preceding claims, **characterized in that,** additionally, in the motor vehicle (50), one or more pieces of position information corresponding to the defined section (13) are identified by means of a global positioning device, wherein said pieces of position information are also transmitted to the map processing device (3) and are taken into account by the map processing device (3) during the comparison.

5. Method according to one of the preceding claims, **characterized in that** object positions for objects (28) in the surroundings (12) of the motor vehicle (50) are determined relative to the motor vehicle from the received surroundings data.

6. Method according to one of the preceding claims, **characterized in that** the map processing device (3) classifies objects (28), contained in the surroundings data, either as landmarks (26) or as obstacles (27).

**7.** Device (2) for a motor vehicle (50) for precise localization of the motor vehicle (50) in its surroundings (12), comprising:

at least one camera (4) for capturing an image sequence of the surroundings (12) of the motor vehicle (50);
an evaluation unit (5), wherein the evaluation unit (5) is designed for detecting and classifying objects (28) in the captured image sequence; determining object positions of the detected and classified objects (28) relative to the camera (4); defining a section (13) in the surroundings (12), wherein the section (13) has a predetermined size, as well as predetermined boundaries (14, 15, 16, 17); associating the detected and classified objects (28) with the determined object positions in the defined section (13); and identifying a traffic lane (22), present in the section (13), of the motor vehicle (50), wherein the traffic lane (22) identified is described by a corridor comprising a left lane boundary (24) and a right lane boundary (23), wherein the left lane boundary (24) and the right lane boundary (23) are each described as lane functions, and these descriptions form lane information; and
a transmitting device (6), which is designed to transmit object information and the object positions of the detected and classified objects (28), section information about the defined section (13), the lane information, and time information to a map processing device (3) arranged outside the vehicle (50) and designed as a central server; and a receiving device (33), which is designed to receive surroundings data from the map processing device (3),
wherein the evaluation unit (5) is further designed to compare the received surroundings data to the defined section (13) and to localize the motor vehicle (50) in its surroundings (12) on the basis of the comparison result.

**8.** Map processing device (3) arranged outside the motor vehicle and designed as a central server, comprising:

a receiving device (7), which is designed to receive the object information and the object positions, the section information, the lane information, and the time information relating to the section (13) from the device (2) according to claim 7,
a comparison device (35), which is designed to compare received section information of the section (13) to a digital map (60) on the basis of the object information and object positions, the section information, the lane information, and the time information, and to identify a corresponding section (13) in the digital map (60), and a transmitting device (34), which is designed to transmit surroundings data, corresponding to the section, from the digital map to the motor vehicle.

**9.** System (1) for precise localization of a motor vehicle (50) in its surroundings (12), comprising at least one device (2) according to claim 7 and a map processing device (3) according to claim 8 arranged outside the vehicle (50) and designed as a central server.

**Revendications**

**1.** Procédé pour localiser avec précision un véhicule automobile (50) dans un environnement (12), comprenant les étapes de :

- dans un dispositif (2) dans le véhicule automobile (50) :
détection d'une série d'images de l'environnement (12) du véhicule automobile (50) au moyen d'au moins une caméra (4), reconnaissance et classification d'objets (28) dans la série d'images détectée au moyen d'une unité d'évaluation (5), détermination de positions d'objets des objets (28) par rapport au véhicule automobile (50) au moyen de l'unité d'évaluation (5), définition d'une sous-partie (13) dans l'environnement (12), la sous-partie (13) présentant une taille prédéfinie ainsi que des limites (14, 15, 16, 17) prédéfinies, association des objets (28) reconnus et classifiés aux positions d'objets déterminées dans la sous-partie (13) définie, détermination d'une file de circulation (22) du véhicule automobile (50) située dans la sous-partie (13) au moyen de l'unité d'évaluation (5), la file de circulation (22) déterminée étant décrite par un couloir formé par une limite de file de circulation gauche (24) et une limite de file de circulation droite (23), la limite de file de circulation gauche (24) et la limite de file de circulation droite (23) étant décrites respectivement comme des fonctions de file de circulation et ces descriptions formant des informations de file de circulation, communication d'informations d'objets et des positions d'objets des objets (28) reconnus et classifiés, d'informations de sous-partie sur la sous-partie (13) définie, des informations de file de circulation et d'une information temporelle à un dispositif de gestion de cartes (3) disposé à l'extérieur du véhicule automobile (50) et formé comme un serveur central par un dispositif d'émission (6) ;
- dans le dispositif de gestion de cartes (3) :

réception des informations d'objets et des positions d'objets, des informations de sous-partie, des informations de file de circulation et de l'information temporelle concernant la sous-partie (13) par le dispositif (2), comparaison des informations de sous-partie reçues sur la sous-partie (13) à une carte numérique (60) sur la base des informations d'objets et des positions d'objets, des informations de sous-partie, des informations de file de circulation et des informations temporelles, détermination d'une sous-partie (13) correspondante dans la carte numérique (60), communication des données d'environnement de la carte numérique (60) correspondant à la sous-partie (13) au dispositif (2) ;

- dans le dispositif (2) dans le véhicule automobile (50) :

réception des données d'environnement à partir du dispositif de gestion de cartes (3) au moyen d'un dispositif de réception (33), comparaison des données d'environnement reçues avec la sous-partie (13) définie au moyen de l'unité d'évaluation (5), localisation du véhicule automobile (50) dans l'environnement (12) sur la base des résultats de comparaison au moyen de l'unité d'évaluation (5).

2. Procédé selon la revendication 1, **caractérisé en ce que** les fonctions de file de circulation sont formées en tant que des fonctions polynomiales de troisième degré.

3. Procédé selon l'une quelconque des revendications 1 ou 2, **caractérisé en ce que** la localisation du véhicule automobile (50) dans la sous-partie (13) définie est effectuée par une comparaison de la limite de file de circulation gauche (24) et la limite de file de circulation droite (23) et/ou des fonctions de file de circulation associées avec les données d'environnement reçues pour cette sous-partie (13) définie.

4. Procédé selon l'une quelconque des revendications précédentes, **caractérisé en ce que,** dans le véhicule automobile (50), une ou plusieurs informations de position correspondant à la sous-partie (13) définie sont en plus déterminées au moyen d'un dispositif de détermination de position global, ces informations de position étant aussi communiquées au dispositif de gestion de cartes (3) et étant aussi prises en compte par le dispositif de gestion de cartes (3) lors de la comparaison.

5. Procédé selon l'une quelconque des revendications précédentes, **caractérisé en ce que** des positions d'objets pour des objets (28) dans l'environnement (12) du véhicule automobile (50) par rapport à ce dernier sont déterminées à partir des données d'environnement reçues.

6. Procédé selon l'une quelconque des revendications précédentes, **caractérisé en ce que** le dispositif de gestion de cartes (3) classifie des objets (28) contenus dans les données d'environnement soit comme des repères (26) soit comme des obstacles (27).

7. Dispositif (2) pour un véhicule automobile (50) pour localiser avec précision le véhicule automobile (50) dans un environnement (12), comprenant :

au moins une caméra (4) pour la détection d'une série d'images de l'environnement (12) du véhicule automobile (50),
une unité d'évaluation (5), l'unité d'évaluation (5) étant formée de façon à reconnaitre et classifier des objets (28) dans la série d'images détectée,
à déterminer des positions d'objets des objets (28) reconnus et classifiés par rapport à la caméra (4), à définir une sous-partie (13) dans l'environnement (12), la sous-partie (13) présentant une taille prédéfinie ainsi que des limites (14, 15, 16, 17) prédéfinies, à associer les objets (28) reconnus et classifiés aux positions d'objets déterminées dans la sous-partie (13) définie et à déterminer une file de circulation (22) du véhicule automobile (50) située dans la sous-partie (13) définie, la file de circulation (22) déterminée étant décrite par un couloir formé par une limite de file de circulation gauche (24) et une limite de file de circulation droite (23), la limite de file de circulation gauche (24) et la limitation de file de circulation droite (23) étant décrites respectivement comme des fonctions de file de circulation et ces descriptions formant des informations de file de circulation et
un dispositif d'émission (6), lequel est formé de façon à communiquer des informations d'objets et les positions d'objets des objets (28) reconnus et classifiés, des informations de sous-partie sur la sous-partie (13) définie, des informations de file de circulation et une information temporelle à un dispositif de gestion de cartes (3) disposé à l'extérieur du véhicule automobile (50) et formé comme un serveur central et un dispositif de réception (33), lequel est formé de façon à recevoir les données d'environnement du dispositif de gestion de cartes (3),
l'unité d'évaluation (5) étant en outre formée de façon à comparer les données d'environnement reçues avec la sous-partie (13) définie et à localiser le véhicule automobile (50) dans l'environnement (12) sur la base du résultat de la comparaison.

8. Dispositif de gestions de cartes (3) disposé à l'extérieur du véhicule automobile et formé comme un serveur central, comprenant :

un dispositif de réception (7), lequel est formé de façon

à recevoir les informations d'objets et les positions d'objets, les informations de sous-partie, les informations de file de circulation et l'information temporelle sur la sous-partie (13) à partir du dispositif (2) conformément à la revendication 7,

un dispositif de comparaison (35), lequel est formé de façon à comparer les informations de sous-partie de la sous-partie (13) reçues avec une carte numérique (60) sur la base des informations d'objets et des positions d'objets, des informations de sous-partie, des informations de file de circulation et des informations temporelles et à déterminer une sous-partie (13) correspondante dans la carte numérique (60) et

un dispositif d'émission (34), lequel est formé de façon à communiquer les données d'environnement de la carte numérique correspondant à la sous-partie au véhicule automobile.

9. Système (1) pour localiser avec précision un véhicule automobile (50) dans un environnement (12), comprenant au moins un dispositif (2) selon la revendication 7 et un dispositif de gestion de cartes (3) disposé à l'extérieur du véhicule automobile (50) et conçu comme serveur central selon la revendication 8.

FIG. 1

FIG. 2

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014002821 A1
- DE 102011119762 A1
- WO 2009098154 A1
- DE 102011117809 A1
- US 20150151725 A1
- WO 2012122589 A1
- DE 102013211696 A1